# EUROPÄISCHE PATENTSCHRIFT

(11) **EP 2 458 491 B1**
(45) Veröffentlichungstag und Bekanntmachung des Hinweises auf die Patenterteilung: **28.01.2015**
(21) Anmeldenummer: 11191060.0
(22) Anmeldetag: 29.11.2011
(51) Int. Cl.: G06F 3/0488, G06F 21/31, G06F 21/34, G06F 21/82, G07F 7/10, G06F 3/048, G07F 19/00

(54) **Vorrichtung zum Lesen von Magnetstreifen- und/oder Chipkarten mit Touchscreen zur PIN-Eingabe**
Device for reading magnetic strips and/or chip cards with touch-screen for PIN entry
Dispositif de lecture de cartes à puce et/ou à bandes magnétiques doté d'un écran tactile pour la saisie d'un code PIN

(30) Priorität: 29.11.2010 DE 102010060862
(43) Veröffentlichungstag der Anmeldung: 30.05.2012
(60) Teilanmeldung: 14184244.3
(73) Patentinhaber: Wincor Nixdorf International GmbH, 33106 Paderborn (DE)
(72) Erfinder: Golücke, Peter, 33106 Paderborn (DE); Carozzi, Andrea, 33125 Delbrück (DE)

(56) Entgegenhaltungen:
- CN-A- 101 813 992
- DE-A1-102004 031 677
- US-A- 5 970 146
- US-B1- 6 317 835

## Beschreibung

Die Erfindung betrifft eine Vorrichtung zum Lesen von Magnetstreifen- und/oder Chipkarten, insbesondere zum Lesen von Bank-, EC- und/oder Kreditkarten. Die Vorrichtung umfasst eine Anzeigeeinheit und ein vor der Anzeigeeinheit angeordnetes Touchmodul, das mindestens einen Sensor zur Ermittlung einer Position einer Berührung eines Anzeigebereichs umfasst. Ferner hat die Vorrichtung ein Sicherheitsmodul zur Steuerung der Anzeigeeinheit und des Touchmoduls.

Bei der Vorrichtung handelt es sich insbesondere um einen Geldautomaten, ein automatisches Kassensystem, eine automatische Tresorkasse und/oder ein Bezahlterminal, welches beispielsweise in Einzelhandelsunternehmen und/oder Gaststätten zum bargeldlosen Bezahlen des Rechnungsbetrages über eine Magnetstreifen- und/oder Chip-Karte, insbesondere eine EC- oder Kreditkarte, eingesetzt wird. Bei bekannten Vorrichtungen führt eine Bedienperson eine Magnetstreifen- und/oder Chipkarte in einen hierfür vorgesehenen Schlitz ein. Mit Hilfe einer Leseeinheit werden Daten aus der Magnetstreifen- und/oder Chipkarte ausgelesen über die die Bedienperson authentifiziert wird. Die Vorrichtungen umfassen eine Anzeigeeinheit, über die die Bedienperson aufgefordert wird, eine persönliche Identifikationsnummer, eine sogenannte PIN, einzugeben, wobei über die Eingabe der PIN sichergestellt werden soll, dass die Bedienperson auch berechtigt ist, mit Hilfe der eingeführten Magnetstreifen- und/oder Chipkarte Geld abzuheben und/oder zu bezahlen. Die Bedienperson gibt daraufhin die PIN über eine hierfür vorgesehene Tastatur, insbesondere über ein sogenanntes Encrypted Pin Pad (EPP) ein.

Problematisch an dieser Eingabe der PIN über die Tastatur ist es, dass hierfür extra eine in der Anschaffung relativ teure EPP-Tastatur vorgesehen werden muss, um sicherzustellen, dass die eingegebene PIN nicht abgefangen werden kann. Ferner muss für die EPP-Tastatur Bauraum vorgesehen sein, der bei den genannten Vorrichtungen knapp bemessen ist. Darüber hinaus sind solche EPP-Tastaturen anfällig für Skimming-Versuche, da auf ihnen einfach zusätzliche Tastaturen, über die die PIN ausgespäht wird, aufgebracht werden können.

Aus dem Dokument DE 10 2008 014 324 Al ist ein Selbstbedienungsgerät bekannt, das eine Bedieneinheit und eine die Bedieneinheit umgebende Abdeckfläche mit Aussparungen umfasst.

Aus dem Dokument DE 10 2008 021 046 A1 ist ein Verfahren zur Inbetriebnahme einer Tastatur eines Selbstbedienungsterminals bekannt.

Aus dem Dokument US 6.317.835 B1 ist ein System zum wahlweisen Erzeugen von verschlüsselten und unverschlüsselten Daten bekannt.

Anspruch 1 ist gegenüber US 6317835 B1 abgegrenzt.

Es ist Aufgabe der Erfindung, eine Vorrichtung zum Lesen von Magnetstreifen- und/oder Chipkarten anzugeben, die eine sichere Eingabe einer persönlichen Identifikationsnummer ermöglicht.

Diese Aufgabe wird durch eine Vorrichtung mit den Merkmalen des Anspruchs 1 gelöst. Vorteilhafte Weiterbildungen der Erfindung sind in den abhängigen Ansprüchen angegeben.

Durch das Verschlüsseln der zweiten Daten, die Informationen über die Position der Berührung des Anzeigebereichs umfassen, durch das Touchmodul und das verschlüsselte Übertragen dieser Daten an das Sicherheitsmodul wird erreicht, dass die Position der Berührung unmittelbar durch das Touchmodul verschlüsselt wird, so dass die Informationen über die Position der Berührung nicht unverschlüsselt übertragen werden. Somit wird ein Abfangen der unverschlüsselten Informationen und somit Rückschlüsse auf die durch die Position der Berührung gekennzeichnete Ziffer der persönlichen Identifikationsnummer oder auf die gesamte persönlichen Identifikationsnummer vermieden. Hierdurch wird eine sichere Eingabe der PIN ermöglicht. Durch das Übertragen der ersten Daten mit Informationen zur Darstellung einer Tastatur mit Hilfe der Anzeigeeinheit von dem Sicherheitsmodul zur Anzeigeeinheit wird sichergestellt, dass die mit Hilfe der Anzeigeeinheit dargestellten Information nicht manipuliert werden kann und die Tastatur zur Eingabe der PIN nur dann angezeigt wird, wenn dies für die Abwicklung auch notwendig ist.

Das Touchmodul umfasst vorzugweise seine Verarbeitungseinheit, insbesondere einen Prozessor, die die zweiten Daten verschlüsselt. Das Touchmodul weist vorzugsweise einen separaten Krypto-Prozessor auf, mit dessen Hilfe die Daten verschlüsselt werden. Unter einem Krypto-Prozessor wird insbesondere ein Chip oder Mikroprozessor verstanden, der die Grundfunktionen für die sichere Datenkommunikation wie die Kryptografie, die Authentisierung und die Verwaltung von Kryptologie-Schlüsseln in sich vereinigt.

Bei der Vorrichtung handelt es sich insbesondere um eine Vorrichtung zur Handhabung von Wertscheinen, beispielsweise einen Geldautomaten, eine automatische Tresorkasse und/oder ein automatisches Kassensystem. Ferner kann es sich bei der Vorrichtung auch um ein Bezahlterminal, beispielsweise ein Terminal zum bargeldlosen Bezahlen in Einzelhandelsfilialen und/oder in Gastronomiebetrieben, handeln. Darüber hinaus kann die Vorrichtung auch ein Kontoauszugsdrucker und/oder ein Informationsterminal in einer Bankfiliale sein.

Die Vorrichtung umfasst insbesondere ein Lesegerät, in das die Magnetstreifen- oder Chipkartenkarte eingeführt wird und das Daten aus der Magnetstreifen- oder Chipkarte ausliest. Nach dem Auslesen der Daten wird die Bedienperson der Vorrichtung insbesondere über die Anzeigeeinheit aufgefordert, die PIN einzugeben, um so sicherzustellen, dass die Bedienperson autorisiert ist, die Magnetstreifen- und/oder Chipkarte zu benutzen.

Der Anzeigebereich, auf dem die Position der Berührung detektiert wird, kann durch eine Scheibe der Anzeigeeinheit und/oder um eine separate Scheibe des Touchmoduls gebildet sein. Ferner können die Anzeigeeinheit und das Touchmodul integriert in Form eines Touchscreens ausgebildet sein. Die Ermittlung der Position der Berührung über den Sensor erfolgt insbesondere optisch, resistiv, kapazitiv und/oder induktiv.

Das Touchmodul kann insbesondere ein resistives Touchmodul sein, bei dem der Sensor zwei vor der Anzeigeeinheit angeordnete leitfähige Schichten umfasst, wobei an mindestens einer dieser Schichten eine Spannung angelegt ist und die Spannungen an den Rändern der mindestens einen Schicht ermittelt werden. In Abhängigkeit dieser ermittelten Spannungen wird, insbesondere mit Hilfe der Verarbeitungseinheit des Touchmoduls, die Position der Berührung detekiert. Eine der beiden Schichten kann insbesondere durch die Scheibe ausgebildet sein.

Alternativ kann das Touchmodul auch ein kapazitives Touchmodul sein, das eine Scheibe umfasst, die mit einer durchsichtigen Metalloxydschicht beschichtet ist. An den Ecken der Beschichtung ist eine elektrische Spannung angelegt, die ein gleichmäßiges elektrisches Feld erzeugt. Durch die Berührung der Scheibe entstehen geringe Ströme, die an den Ecken gemessen werden. Die resultierenden Ströme stehen im direkten Verhältnis zu der Position, an der die Scheibe des Touchmoduls durch eine Bedienperson berührt wird. Die Scheibe kann auch eine Scheibe der Anzeigeeinheit sein.

Bei einer weiteren alternativen Ausführungsform kann auch ein Touchmodul vorgesehen sein, das die Position der Berührung mit Hilfe von Infrarotlicht ermittelt. In diesem Fall umfasst das Touchmodul Infrarotlicht aussendende Dioden, die ein Netz aus Infrarotstrahlen über der Scheibe erzeugen. Den Infrarotlicht aussendenden Dioden gegenüberliegend sind Infrarotlicht detektierende Dioden vorgesehen, die ohne Unterbrechung der ausgesandten Infrarotstrahlen diese empfangen. Bei einer Berührung der Scheibe wird zumindest ein Teil der ausgesandten Infrarotstrahlen unterbrochen, so dass ein Teil der detektierenden Dioden keine oder eine wesentlich geringere Infrarotstrahlung erfassen. In Abhängigkeit hiervon wird, insbesondere mit Hilfe der der Verarbeitungseinheit, die Position der Berührung ermittelt.

Die erste Daten und/oder die zweiten Daten können auch in Form von Signalen übertragen werden. Unter dem Anordnen des Touchmoduls vor der Anzeigeeinheit wird insbesondere verstanden, dass das Touchmodul vor einem Anzeigebereich der Anzeigeeinheit angeordnet ist. Der Erfassungsbereich des Touchmoduls zum Erfassen der Berührung ist vorzugsweise zwischen der Anzeigeinheit und der Bedienperson angeordnet. Bei einer bevorzugten Ausführungsform der Erfindung verschlüsselt das Sicherheitsmodul die ersten Daten und überträgt diese verschlüsselten Daten zur Anzeigeeinheit. Auf diese Weise wird erreicht, dass eine Manipulation der ersten Daten und somit die Manipulation der mit Hilfe der Anzeigeeinheit angezeigten Information verhindert oder zumindest erschwert wird. Insbesondere wird hiermit verhindert, dass in betrügerischer Absicht eine Tastatur mit der Aufforderung zur Eingabe der PIN auf der Anzeigeeinheit angezeigt wird.

Das Touchmodul ermittelt insbesondere eine erste und/oder zweite Koordinate der Position der Berührung des Anzeigebereichs und ermittelt einen ersten Übertragungswert durch Addition eines ersten Versatzwertes zu der ersten Koordinate und/oder einen zweiten Übertragungswert durch Addition eines zweiten Versatzwertes zu der zweiten Koordinate. Die zweiten Daten umfassen Informationen über den ersten Übertragungswert und/oder den zweiten Übertragungswert. Durch das Hinzuaddieren der Versatzwerte wird erreicht, dass nicht die wirkliche Koordinate, sondern ein veränderter Zahlenwert übertragen wird. Somit wird erreicht, dass von den Übertragungswerten kein Rückschluss auf die Position der Berührung des Anzeigebereichs möglich ist. Insbesondere können ohne die Versatzwerte allein aufgrund der Übertragungswerte keine Rückschlüsse auf die über Touchmodul eingegebene Ziffer bzw. PIN geschlossen werden. Das Ermitteln der Übertragungswerte erfolgt insbesondere mit Hilfe der Verarbeitungseinheit des Touchmoduls.

Das Sicherheitsmodul ermittelt vorzugsweise den ersten Versatzwert und/oder den zweiten Versatzwert, insbesondere mit Hilfe eines Zufallzahlengenerators. Hierdurch wird erreicht, dass die Koordinaten verschiedener Berührungen des Anzeigebereichs, insbesondere sogar jede Koordinate verschiedener Berührungen des Anzeigebereichs, mit einem unterschiedlichen Versatzwert verfälscht werden, so dass ein höheres Maß an Sicherheit erreicht wird. Das Sicherheitsmodul überträgt dritte Daten mit Informationen über den ersten Versatzwert und/oder den zweiten Versatzwert vor der Berührung des Anzeigebereichs an das Touchmodul. Die Übertragung erfolgt insbesondere verschlüsselt, so dass die Versatzwerte nicht abgefangen werden können. Der verschlüsselten Versatzwerte werden insbesondere durch die Verarbeitungseinheit des Touchmoduls entschlüsselt. Somit wird das Maß der Sicherheit weiter erhöht. Insbesondere wird jede Ziffer einer PIN mit anderen Versatzwerten verschlüsselt.

Die Verschlüsselung der ersten, der zweiten und/oder der dritten Daten erfolgt vorzugsweise mit Hilfe eines hinterlegten Verschlüsselungsalgorithmuses, insbesondere mit Hilfe eines Data Encryption Standard (DES) Verschlüsselungsalgorithmuses. Somit wird die Datenübertragungssicherheit weiter erhöht. Bei einer besonders bevorzugten Ausführungsform der Erfindung erfolgt sowohl die Verschlüsselung der Daten durch die Addition der Versatzwerte als auch die Verschlüsselung durch den hinterlegten Verschlüsselungsalgorithmus, so dass eine doppelte Verschlüsselung der übertragenen Daten gegeben ist. Somit wird ein sehr hohes Maß an Datensicherheit erreicht.

Die Verschlüsselung der ersten, der zweiten und/oder der dritten Daten erfolgt vorzugsweise mit Hilfe des gleichen Verschlüsselungsalgorithmuses. Bei einer alternativen Ausführungsform der Erfindung kann das Sicherheitsmodul die ersten und/oder die dritten Daten auch mit einem anderen Verschlüsselungsalgorithmus verschlüsseln als denjenigen Verschlüsselungsalgorithmus, mit dem das Touchmodul die zweiten Daten verschlüsselt.

Das Sicherheitsmodul entschlüsselt vorzugsweise die von dem Touchmodul empfangenen zweiten Daten und ermittelt die erste Koordinate durch Subtraktion des ersten Versatzwertes von dem ersten Übertragungswert und/oder die zweite Koordinate durch Subtraktion des zweiten Versatzwertes von dem zweiten Übertragungswert. Somit wird erreicht, dass in dem Sicherheitsmodul über die Koordinaten die Position der Berührung des Anzeigebereichs und somit die eingegebene ziffer ermittelt werden kann.

Die von dem Sicherheitsmodul an das Touchmodul übertragenen ersten Daten umfassen insbesondere Informationen über die Position, an der die Tastatur auf der Anzeigeeinheit angezeigt werden soll. Die ersten Daten umfassen hierbei insbesondere eine erste Koordinate und eine zweite Koordinate eines voreingestellten Punktes der Tastatur, insbesondere des Mittelpunktes der Tastatur. Die Position, an der die Tastatur auf der Anzeigeeinheit angezeigt wird, wird durch das Sicherheitsmodul insbesondere mit Hilfe eines Zufallsverfahrens festgelegt. Hierzu werden die erste Koordinate und die zweite Koordinate vorzugsweise durch ein Zufallszahlengenerator ermittelt. Hierdurch wird erreicht, dass die Tastatur bei verschiedenen Eingaben von PIN-Nummern an verschiedenen Positionen der Anzeigeeinheit angezeigt wird. Durch dieses Verändern der Position der Tastatur auf der Anzeigeeinheit wird es Personen, die in betrügerischer Absicht versuchen die PIN auszuspähen, unmöglich gemacht, auf Grund der Position, an der der Anzeigebereich berührt wird, einen Rückschluss auf die durch die Berührung eingegebene Ziffer der PIN zu schließen. Insbesondere wird somit verhindert, dass auf dem Anzeigebereich in betrügerischer Absicht eine weitere Einheit zur Ermittlung der Position der Berührung des Anzeigebereichs angebracht wird, über die die den Betrug ausführenden Personen versuchen an die PIN zu gelangen.

Das Sicherheitsmodul steuert hierzu die Anzeigeeinheit derart an, dass die Anzeigeeinheit bei einer ersten Eingabe einer PIN die Tastatur an einer ersten Position und bei einer zweiten Eingabe einer PIN an einer von der ersten Position verschiedenen zweiten Position anzeigt.

Das Touchmodul und das Sicherheitsmodul sind vorzugsweise über eine erste Kabelverbindung, insbesondere mit Hilfe eines USB-Kabels, miteinander verbunden. Die Anzeigeeinheit und das Sicherheitsmodul sind vorzugsweise über eine zweite Kabelverbindung, insbesondere mit Hilfe eines USB-Kabels und/oder eines DVI-Kabels, miteinander verbunden. Durch die Verbindung des Sicherheitsmoduls mit dem Touchmodul bzw. der Anzeigeeinheit über eine kabelgebundene Verbindung wird, verglichen mit einer kabellosen Datenübertragung, ein höheres Maß an Sicherheit erreicht. Ferner ist es vorteilhaft, wenn ein erster Sensor zur Ermittlung einer Unterbrechung der ersten Kabelverbindung und/oder ein zweiter Sensor zur Ermittlung einer Unterbrechung der zweiten Kabelverbindung vorgesehen sind. Somit können Manipulationsversuche, insbesondere das Zwischenschalten einer Einheit zum Auslesen der über die jeweilige Kabelverbindung übertragenen Daten, detektiert und somit Manipulationsversuchen vorgebeugt werden. Detektiert der erste Sensor und/oder der zweite Sensor eine Unterbrechung der ersten bzw. der zweiten Kabelverbindung wird vorzugsweise ein Alarm ausgelöst, so dass eine Bedienperson auf den Manipulationsversuch aufmerksam gemacht wird. Ferner kann bei der Detektion einer Unterbrechung der ersten und/oder der zweiten Kabelverbindung ein rotes Anzeigeelement, beispielsweise eine LED, aufleuchten oder ein hierfür vorgesehener Anzeigebereich und/oder ein hierfür vorgesehenes Anzeigeelement aktiviert werden, so dass eine Bedienperson auf die Manipulation hingewiesen wird. Alternativ ist es möglich, dass bei einer Unterbrechung der ersten und/oder der zweiten Kabelverbindung die Vorrichtung in einen Störmodus versetzt wird, bei dem eine Eingabe einer PIN nicht möglich ist.

Es ist vorteilhaft, wenn das Touchmodul ein Speicherelement umfasst, in dem Daten zur eindeutigen Identifikation des Touchmoduls, insbesondere eine Seriennummer, gespeichert sind. Das Sicherheitsmodul liest diese Daten in voreingestellten Zeitabständen oder kontinuierlich aus und ermittelt in Abhängigkeit dieser ausgelesenen Daten das Vorhandensein des Touchmoduls. Bei einer besonders bevorzugten Ausführungsform der Erfindung vergleicht das Sicherheitsmodul die ausgelesene Seriennummer mit einer voreingestellten Sollseriennummer. Wenn die ausgelesene Seriennummer und die Sollseriennummer nicht übereinstimmen und/oder wenn das Sicherheitsmodul überhaupt keine Seriennummer ermitteln kann, wird das Nichtvorhandensein der Anzeigeeinheit hierdurch detektiert.

Ferner ist es vorteilhaft, wenn auch die Anzeigeeinheit ein Speicherelement umfasst, in dem Daten zur eindeutigen Identifizierung der Anzeigeeinheit gespeichert sind. Das Sicherheitsmodul liest auch diese Daten in voreingestellten Zeitabständen oder kontinuierlich aus und ermittelt in Abhängigkeit der ausgelesenen Daten das Vorhandensein der Anzeigeeinheit. Auch in dem Speicherelement der Anzeigeeinheit ist insbesondere eine Seriennummer gespeichert, die von dem Sicherheitsmodul mit einer voreingestellten Sollseriennummer verglichen wird.

Das Speicherelement des Touchmoduls und/oder das Speicherelement der Anzeigeeinheit sind vorzugsweise jeweils über einen Inter Integrated Circuit (I2C) Bus mit dem Sicherheitsmodul verbunden. Hierdurch wird eine einfache, fälschungssichere Verbindung erreicht.

Ferner ist es vorteilhaft, wenn das Touchmodul und/oder die Anzeigeeinheit in einer Einbaulage an einem Gehäuse der Vorrichtung gelagert sind und wenn ein erster Ausbauschutzschalter und/oder ein zweiter Ausbauschutzschalter vorgesehen sind. Durch den ersten Ausbauschutzschalter kann das Entfernen des Touchmoduls aus der Einbaulage und durch den zweiten Ausbauschutzschalter das Entfernen der Anzeigeeinheit aus der Einbaulage ermittelt werden. Hierzu öffnet der erste Ausbauschutzschalter bei einem Entfernen des Touchmoduls aus der Einbaulage einen geschlossenen elektrischen Stromkreis oder schlisst einen geöffneten elektrischen Stromkreis. Durch das Öffnen bzw. das Schließen des Stromkreises detektiert das Sicherheitsmodul das Entfernen des Touchmoduls aus der Einbaulage. Entsprechend öffnet der zweite Ausbauschutzschalter diesen oder einen anderen geschlossenen elektrischen Stromkreis bzw. schließt diesen oder einen anderen geöffneten Stromkreis, wenn die Anzeigeeinheit aus der Einbaulage entfernt wird. Das Sicherheitsmodul detektiert in Abhängigkeit des Öffnens bzw. des Schließens des Stromkreises entsprechend das Entfernen der Anzeigeeinheit aus der Einbaulage. Somit kann durch die Ausbauschutzschalter auf einfache Weise ermittelt werden, wenn das Touchmodul und/oder die Anzeigeeinheit aus der Einbaulage entfernt werden, so dass Manipulationsversuche einfach und zeitnah ermittelt werden können. Bei einer alternativen Ausführungsform kann auch nur ein Ausbauschutzschalter vorgesehen sein, mit dessen Hilfe sowohl das Entfernen des Touchmoduls aus der Einbaulage als auch das Entfernen der Anzeigeeinheit aus der Einbaulage detektierbar ist.

Ferner ist es vorteilhaft, wenn das Sicherheitsmodul ermittelt, ob die Vorrichtung in einem sicheren Betriebsmodus oder einem unsicheren Betriebsmodus betrieben ist. Die vorrichtung ist insbesondere dann in einem sicheren Betriebsmodus betrieben, wenn Daten zwischen dem Sicherheitsmodul und dem Touchmodul verschlüsselt übertragen werden, die Daten zwischen dem Sicherheitsmodul und der Anzeigeeinheit verschlüsselt übertragen werden, die erste Kabelverbindung nicht unterbrochen ist, die zweite Kabelverbindung nicht unterbrochen ist, die Anzeigeeinheit in der Einbaulage angeordnet ist und/oder das Touchmodul in der Einbaulage angeordnet ist.

Der sichere Betriebsmodus ist insbesondere derjenige Betriebsmodus, der für die Eingabe der PIN vorgesehen ist. Bei einer besonders bevorzugten Ausführungsform der Erfindung ist die PIN-Eingabe nur dann möglich, wenn die Vorrichtung auch tatsächlich in dem sicheren Betriebsmodus betrieben ist.

Das Sicherheitsmodul steuert die Anzeigeeinheit insbesondere derart an, dass über die Anzeigeeinheit angezeigt wird, in welchem Betriebszustand die Vorrichtung betrieben ist. Somit wird erreicht, dass eine Bedienperson der Vorrichtung den Betriebsmodus erkennen und bei der Anzeige des unsicheren Betriebsmodus die Eingabe der PIN unterlassen kann. Somit wird der Schutz vor dem Ausspähen der PIN erhöht. Die Anzeigeeinheit zeigt insbesondere eine rote und eine grüne Fläche an, wobei, wenn die Vorrichtung in dem sicheren Betriebmodus betrieben ist, die grüne Fläche in einem hellen Grün und die rote Fläche in einem dunklen Rot dargestellt ist, wohingegen die grüne Fläche in einem dunklen Grün und die rote Fläche in einem hellen Rot dargestellt sind, wenn die Vorrichtung in dem unsicheren Betriebsmodus betrieben ist. Bei einer alternativen Ausführungsform der Erfindung können auch außerhalb der Anzeigeeinheit angeordnete Lampen, insbesondere LEDs, vorgesehen sein, über die der Betriebsmodus angezeigt wird. Zusätzlich oder alternativ ist auch die Ausgabe des Betriebsmodus über einen Warnton, insbesondere die Aktivierung des Warntons bei unsicherem Betriebsmodus, möglich.

Ferner ist es vorteilhaft, wenn das Sicherheitsmodul die Anzeigeeinheit derart ansteuert, dass diese Informationen anzeigt, die eine Bedienperson der Vorrichtung auffordern, die PIN nur im gesicherten Betriebsmodus einzugeben. Hierdurch wird verhindert, dass die Bedienperson versehentlich nicht darauf achtet, in welchem Betriebsmodus die Vorrichtung betrieben ist und somit verhindert wird, dass die Bedienperson die PIN versehentlich im unsicheren Betriebsmodus eingibt.

Ferner ist es vorteilhaft, wenn auf mindestens einem Teilbereich der Anzeigeeinheit eine Sichtschutzfolie angeordnet ist, durch die mit Hilfe der Anzeigeeinheit angezeigte Informationen nur aus einem voreingestellten Betrachtungsabstandsbereich und/oder einem voreingestellten Betrachtungswinkelbereich lesbar sind. Der Betrachtungsabstandsbereich und der Betrachtungswinkelbereich sind insbesondere derart voreingestellt, dass nur eine unmittelbar vor der Anzeigeeinheit befindliche Bedienperson die angezeigten Informationen lesen kann. Hierdurch wird das Ausspähen der PIN erschwert, da die ausspähende Person zwar erkennen kann, welcher Stelle des Anzeigebereichs die die PIN eingebende Bedienperson berührt, aber nicht erkennen kann, welche Ziffer an dieser Stelle von der Anzeigeeinheit angezeigt wird. Die Sichtschutzfolie bildet insbesondere einen Polarisationsfilter.

Ferner ist es vorteilhaft, wenn an mindestens einer Seite der Anzeigeeinheit mindestens ein mechanisches Sichtschutzelement zum Verhindern des Ausspähens der Eingabe der PIN angeordnet ist. Insbesondere ist an mindestens drei Seiten der Anzeigeeinheit ein solches mechanisches Sichtschutzelement vorgesehen. Das Sichtschutzelement verhindert oder erschwert, dass eine ausspähende Person erkennen kann, an welcher Position die Bedienperson den Anzeigebereich berührt.

Die Vorrichtung kann insbesondere eine Steuereinheit zur Steuerung des Sicherheitsmoduls umfassen, wobei die Steuereinheit über mindestens eine Datenübertragungsverbindung, vorzugsweise eine kabelgebundene Datenübertragungsverbindung, mit dem Sicherheitsmodul verbunden ist. Die Steuereinheit dient ferner insbesondere zur Steuerung weiterer Einheiten der Vorrichtung, beispielsweise zur Steuerung einer Leseeinheit zum Auslesen der Magnetstreifen- und/oder Chipkarte. Durch das Zwischenschalten des Sicherheitsmoduls zwischen die Steuereinheit und das Touchmodul wird erreicht, dass die Steuereinheit keinen direkten Zugriff auf die Anzeigeeinheit und das Touchmodul hat, so dass, selbst wenn es einer Person gelingt, Zugriff auf die Steuereinheit zu erlangen, dadurch noch kein Zugriff auf die eingegebene PIN möglich ist und auch die Anzeigeeinheit und das Touchmodul nicht derart manipuliert werden können, dass die PIN ermittelt werden kann. Somit wird die Sicherheit erhöht.

In dem unsicheren Betriebsmodus leitet das Sicherheitsmodul von der Steuereinheit erzeugte Daten zur Steuerung der Anzeigeeinheit unverändert an die Anzeigeeinheit weiter, so dass bei nicht sicherheitsrelevanten Eingaben der Rechenaufwand des Sicherheitsmoduls minimiert wird. In dem sicheren Betriebsmodus dahingegen leitet das Sicherheitsmodul ausschließlich selbsterzeugte Daten an die Anzeigeeinheit weiter. Somit wird sichergestellt, dass im sicheren Betriebsmodus eventuelle Manipulationen der Steuereinheit keinen Einfluss auf die Anzeige der Anzeigeeinheit haben. Das Sicherheitsmodul umfasst insbesondere einen DVI-Switch, über den die Datenübertragungsverbindung von der Steuereinheit zum Sicherheitsmodul in dem unsicheren Betriebsmodus direkt mit einer Datenübertragungsverbindung von dem Sicherheitsmodul zu der Anzeigeeinheit, insbesondere mit der zweiten Kabelverbindung, verbunden ist. Im sicheren Betriebsmodus ist durch den DVI-Switch die zuvor beschriebene Datenübertragungsverbindung zwischen der Steuereinheit und der Anzeigeeinheit unterbrochen.

Die Steuereinheit arbeitet insbesondere Programmdaten eines ersten Betriebssystems und das Sicherheitsmodul Programmdaten eines von dem ersten Betriebssystem verschiedenen zweiten Betriebssystems ab. Die Betriebssysteme sind insbesondere derart ausgebildet, dass keine Abhängigkeit zwischen ihnen besteht. Somit wird das Maß der Sicherheit weiter erhöht. Das erste Betriebssystem ist insbesondere ein handelsübliches Betriebssystem, wohingegen das zweite Betriebssystem ein speziell für die Aufgaben des Sicherheitsmoduls programmiertes Betriebssystem ist. Somit wird erreicht, dass Sicherheitslücken des handelsüblichen Betriebssystems zumindest im sicheren Betriebsmodus keine Auswirkungen für die Sicherheit der PIN-Eingabe haben. Weitere Merkmale und Vorteile der Erfindung ergeben sich aus der folgenden Beschreibung, die die Erfindung in Zusammenhang mit den beigefügten Figuren anhand von Ausführungsbeispielen näher erläutert.

Es zeigen:
- Figur 1: ein Blockschaltbild einer Vorrichtung zum Auslesen von Magnetstreifen- und/oder Chipkarten;
- Figur 2: eine schematische Darstellung eines Ausschnitts der Vorrichtung nach Figur 1 gemäß einer ersten Ausführungsform der Erfindung;
- Figur 3: eine schematische Darstellung eines Ausschnitt der Vorrichtung nach Figur 1 gemäß einer zweiten Ausführungsform der Erfindung;
- Figur 4: eine schematische Darstellung eines Ausschnitts der Vorrichtung nach Figur 1 gemäß einer dritten Ausführungsform der Erfindung; und
- Figur 5: eine überlagerte Darstellung mehrere Anzeigen einer Anzeigeeinheit der Vorrichtung gemäß Figur 1 gemäß der dritten Ausführungsform.

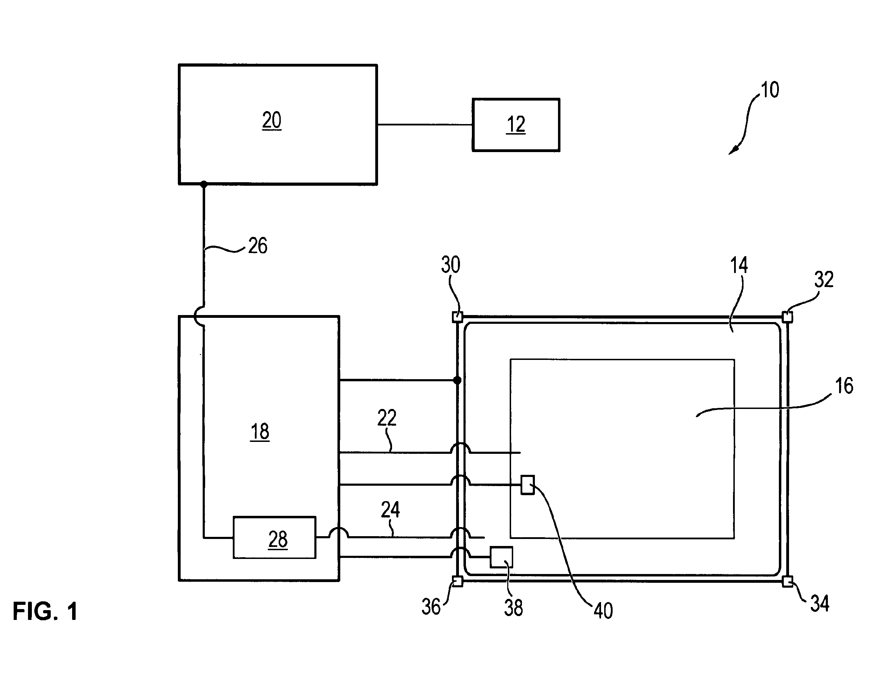

In Figur 1 ist eine schematische, stark vereinfachte Darstellung einer Vorrichtung 10 zum Lesen einer Magnetstreifen- und/oder Chipkarten in Form eines Blockschaltbildes dargestellt. Die Vorrichtung 10 umfasst eine Leseeinheit 12 zum Lesen der Magnetstreifen- und/oder Chipkarte, eine Anzeigeeinheit 14, ein vor der Anzeigeeinheit 14 angeordnetes Touchmodul 16, ein Sicherheitsmodul 18 zur Steuerung der Anzeigeeinheit 14 und des Touchmoduls 16 und eine Steuereinheit 20 zur Steuerung der Leseeinheit 12 und des Sicherheitsmoduls 18.

Bei der Vorrichtung 10 handelt es sich insbesondere um einen Geldautomaten, eine automatische Tresorkasse, ein automatisches Kassensystem, ein Bezahlterminal, einen Kontoauszugsdrucker oder ein Informationsterminal. Bei der Magnetstreifen- und/oder Chipkarte handelt es sich insbesondere um eine Bankkarte, eine EC-Karte und/oder eine Kreditkarte. Unter dem Anordnen des Touchmoduls 16 vor der Anzeigeeinheit 14 wird insbesondere verstanden, dass das Touchmodul 16 vor derjenigen Seite der Anzeigeeinheit 14 angeordnet ist, mit Hilfe derer die Informationen anzeigbar sind. Das Touchmodul 16 ist insbesondere zwischen einer die Vorrichtung 10 bedienenden Bedienperson und der Anzeigeeinheit 14 angeordnet. Bei der Anzeigeeinheit 14 handelt es sich insbesondere um einen Monitor. In diesem Fall ist das Touchmodul 16 vor dem Monitor angeordnet.

Das Touchmodul 16 umfasst mindestens einen nicht dargestellten Sensor zur Ermittlung der Position der Berührung eines Anzeigebereichs. Der Anzeigebereich kann insbesondere eine Scheibe der Anzeigeeinheit 14 oder eine separate zum Schutz der Anzeigeeinheit 14 vorgesehene Scheibe des Touchmoduls 16 sein. Die Anzeigeeinheit 14 und das Touchmodul 16 können vorzugsweise einteilig in Form eines Touchscreens ausgebildet sein.

Das Sicherheitsmodul 18 ist über eine erste Kabelverbindung 22, insbesondere über ein USB-Kabel, mit dem Touchmodul 16 zur Übertragung von Daten verbunden. Ferner ist das Sicherheitsmodul 18 über eine zweite Kabelverbindung 24, insbesondere ein USB-Kabel und/oder DVI-Kabel, mit der Anzeigeeinheit 14 verbunden. Des Weiteren ist das Sicherheitsmodul 18 über eine Datenübertragungsverbindung 26 mit der Steuereinheit 20 verbunden. Die Datenübertragungsverbindung 26 erfolgt insbesondere über ein USB-Kabel oder ein DVI-Kabel. Bei einer alternativen Ausführungsform der Erfindung kann die Steuereinheit 20 auch über zwei Datenübertragungsverbindungen, insbesondere über ein USB-Kabel und über ein DVI-Kabel, mit dem Sicherheitsmodul 18 verbunden sein.

Das Sicherheitsmodul 18 umfasst einen DVI-Switch 28, über den in einem unsicheren Betriebsmodus Daten, die über die Datenübertragungsverbindung 26 von der Steuereinheit 20 zum Sicherheitsmodul 18 übertragen wurden, unverändert an die Anzeigeeinheit 14 über die zweite Kabelverbindung 24 weitergeleitet werden. In einem sicheren Betriebsmodus hingegen unterbricht der DVI-Switch die direkte Verbindung zwischen der Steuereinheit 20 und der Anzeigeeinheit 14, so dass über die zweite Kabelverbindung 24 nur von dem Sicherheitsmodul 18 erzeugte Daten an die Anzeigeeinheit 14 übertragen werden können.

Die Steuereinheit 20 ist insbesondere mit einem ersten Betriebssystem und das Sicherheitsmodul 18 mit einem von dem ersten Betriebssystem verschiedenen zweiten Betriebssystem betrieben. Das erste Betriebssystem ist insbesondere ein handelsübliches Betriebssystem, beispielsweise Microsoft Windows, wohingegen das zweite Betriebssystem des Sicherheitsmoduls 18 ein speziell für das Sicherheitsmodul 18 programmiertes Betriebssystem ist. Somit ist das zweite Betriebssystem genau auf die Aufgaben des Sicherheitsmoduls 18 zugeschnitten. Durch die Trennung der direkten Datenverbindung zwischen der Steuereinheit 20 und der Anzeigeeinheit 14 in dem sicheren Betriebsmodus wird erreicht, dass eventuell vorhandene Sicherheitslücken des handelsüblichen ersten Betriebssystems der Steuereinheit 20 zumindest im sicheren Betriebsmodus nicht zur Manipulation der Anzeige der Anzeigeeinheit 14 ausgenutzt werden können. Hierdurch wird ein hohes Maß von Sicherheit erzielt.

Die Anzeigeeinheit 14 und das Touchmodul 16 sind in einer Einbaulage mit mindestens einem nicht dargstellten Gehäuseteil der Vorrichtung 10 verbunden. Die Vorrichtung 10 umfasst vier Ausbauschutzschalter 30 bis 36, die auch als Removal Switch bezeichnet werden. Wird die Anzeigeeinheit 14 und/oder das Touchmodul 16 aus der Einbaulage entfernt, so öffnet einer der Ausbauschutzschalter 30 bis 36 oder mehrere der Ausbauschutzschalter 30 bis 36 einen zuvor geschlossenen Stromkreis. Durch das Öffnen des geschlossenen Stromkreises detektiert das Sicherheitsmodul 18 das Entfernen der Anzeigeeinheit 14 und/oder des Touchmoduls 16 aus der Einbaulage. Bei einer alternativen Ausführungsform der Erfindung kann bei einem Entfernen der Anzeigeeinheit 14 und/oder des Touchmoduls 16 aus der Einbaulage auch ein zuvor geöffneter Stromkreis durch einen oder mehrere der Ausbauschutzschalter 30 bis 36 geschlossen werden und das Sicherheitsmodul 18 in Abhängigkeit des Öffnens des Stromkreises das Entfernen der Anzeigeeinheit 14 und/oder des Touchmoduls 16 aus der Einbaulage detektieren. Hierdurch wird erreicht, dass auf einfache Weise Manipulationen an der Anzeigeeinheit 14 und/oder des Touchmoduls 16 detektiert werden können und somit die Sicherheit erhöht wird.

Ferner umfasst die Anzeigeeinheit 14 ein Speicherelement 38, in dem Daten zur eindeutigen Identifikation der Anzeigeeinheit 14 gespeichert sind. Diese Daten umfassen insbesondere eine eindeutige Seriennummer. Das Sicherheitsmodul 18 liest in voreingestellten Zeitabständen oder kontinuierlich die auf dem Speicherelement 38 gespeicherten Daten aus und ermittelt in Abhängigkeit der ausgelesenen Daten ob die Anzeigeeinheit 14 vorhanden ist oder nicht. Dies erfolgt insbesondere durch einen Vergleich der aus dem Speicherelement 38 ausgelesenen Seriennummer mit einer in einem Speicherelement des Sicherheitsmoduls 18 gespeicherten voreingestellten Sollseriennummer oder analysiert und prüft die Gültigkeit der ausgelesenen Seriennummer auf andere Weise. Weichen die beiden Nummern voneinander ab oder kann das Sicherheitselement 18 keine Seriennummer aus dem Speicherelement 38 auslesen, so wird daraus geschlossen, dass die Anzeigeeinheit 14 aus der Einbaulage entfernt wurde, die zweite Kabelverbindung 24 getrennt wurde, die Anzeigeeinheit 14 manipuliert und/oder die zweite Kabelverbindung 24 manipuliert wurde.

Ebenso umfasst das Touchmodul 16 ein Speicherelement 40, in dem Daten zur eindeutigen Identifikation des Touchmoduls 16 gespeichert sind. Das Sicherheitsmodul 18 liest in voreingestellten Zeitabständen oder kontinuierlich die Daten des Speicherelements 40 aus und ermittelt in Abhängigkeit der ausgelesenen Daten das Vorhandensein des Touchmoduls 16. Die in dem Speicherelement 40 gespeicherten Daten umfassen insbesondere eine Seriennummer des Touchmoduls 16. Das Sicherheitsmodul 18 vergleicht diese Seriennummer mit einer in einem Speicherelement des Sicherheitsmoduls 18 gespeicherten voreingestellten Sollseriennummer. Ergibt der Vergleich, dass die Seriennummer und die Sollseriennummer nicht übereinstimmen oder konnte das Sicherheitsmodul 18 überhaupt keine Seriennummer auslesen, so wird hieraus geschlossen, dass das Touchmodul 16 aus der Einbaulage entfernt wurde, das Touchmodul 16 manipuliert wurde, die erste Kabelverbindung 22 getrennt wurde und/oder die erste Kabelverbindung 22 manipuliert wurde.

Die Speicherelemente 38, 40 umfassen vorzugsweise jeweils einen Seriennummernchip der Firma Maxim Integrated Products Inc. vom Typ "DS2401". Die Speicherelemente 38, 40 sind vorzugsweise jeweils über einen Integrated Circuit (I2C) Bus mit dem Sicherheitsmodul verbunden. Unter dem Entfernen des Touchmoduls 16 bzw. der Anzeigeeinheit 14 aus der Einbaulage wird insbesondere verstanden, wenn das Touchmodul 16 bzw. die Anzeigeinheit 14 ausgebaut wird oder die Lage und/oder Ausrichtung innerhalb der Vorrichtung 10 verändert wird. Alternativ oder zusätzlich kann auch mit Hilfe von Beschleunigungssensoren ein Entfernen der Anzeigeeinheit 14 und/oder des Touchmoduls 16 aus der Einbaulage ermittelt werden.

Wird von einer Bedienperson der Vorrichtung 10 eine Magnetstreifen- und/oder Chipkarte in die Leseeinheit 12 eingeführt, so erzeugt das Sicherheitsmodul 18 erste Daten zur Darstellung einer Tastatur zur Eingabe einer persönlichen Identifikationsnummer (PIN) der Bedienperson auf der Anzeigeeinheit 14. Das Sicherheitsmodul 18 verschlüsselt die ersten Daten mit Hilfe eines voreingestellten Verschlüsselungsalgorithmus, insbesondere mit Hilfe eines Data Encryption Standard (DES) Verschlüsselungsalgorithmuses, und überträgt die verschlüsselten ersten Daten über die zweite Kabelverbindung 24 zu der Anzeigeeinheit 14. Auf der Anzeigeeinheit 14 wird daraufhin eine Tastatur dargestellt, über die die Bedienperson der Vorrichtung 10 eine PIN eingeben kann.

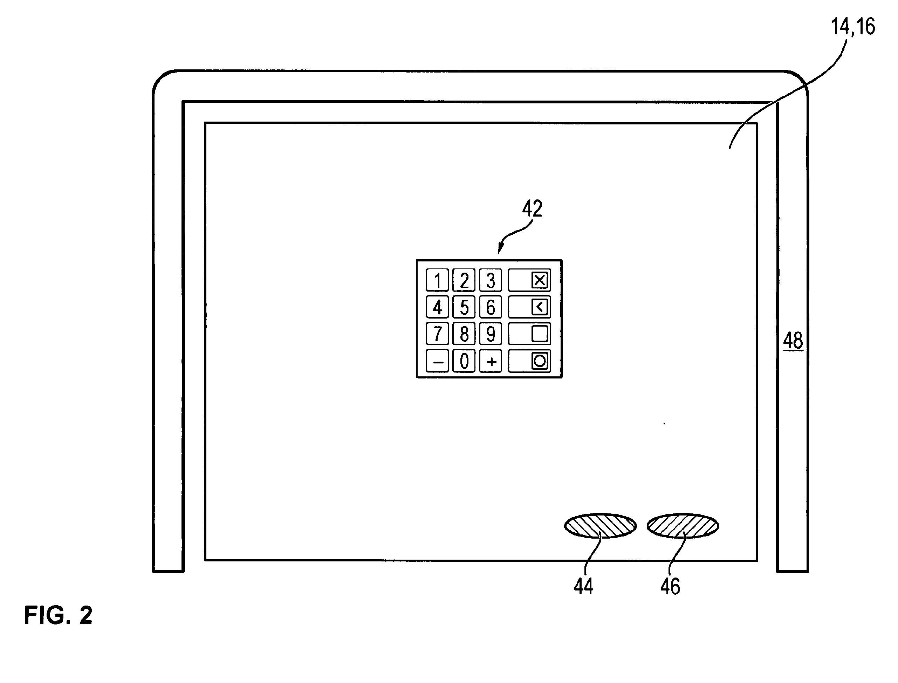

In Figur 2 ist eine schematische Darstellung eines Ausschnitts der Vorrichtung 10 nach Figur 1 gemäß einer ersten Ausführungsform der Erfindung dargestellt. Bei dieser ersten Ausführungsform ist die Tastatur zur Eingabe der PIN in der Mitte der Anzeigeeinheit 14 dargestellt. Bei der in Figur 2 gezeigten ersten Ausführungsform ist das Touchmodul 16 derart ausgebildet, dass der gesamte Bildschirm der Anzeigeeinheit 14 von ihm erfasst wird, so dass die Position einer Berührung über den gesamten Bildschirm ermittelt werden kann. In der in Figur 2 gezeigten schematischen Draufsicht fallen somit die Anzeigeeinheit 14 und das Touchmodul 16 zusammen, so dass sie durch das gemeinsame Bezugszeichen 14, 16 bezeichnet sind. Die auf der Anzeigeeinheit 14 dargestellte Tastatur ist mit dem Bezugszeichen 42 bezeichnet.

zur Eingabe der PIN berührt die Bedienperson die Scheibe an derjenigen Stelle, an der die einzugebende Ziffer der PIN dargestellt ist. Die Position der Berührung der Scheibe wird mit Hilfe des Sensors des Touchmoduls 16 ermittelt. Insbesondere ermittelt der Sensor eine erste und eine zweite Koordinate der Position der Berührung der Scheibe. Eine Verarbeitungseinheit des Touchmoduls 16 ermittelt hieraus einen ersten und einen zweiten Übertragungswert, in dem sie einen ersten Versatzwert zu der ersten Koordinate und einen zweiten Versatzwert zu der zweiten Koordinate hinzuaddiert. Die beiden Versatzwerte wurden von dem Sicherheitsmodul 18 zuvor verschlüsselt zum Touchmodul 16 übertragen und von der Verarbeitungseinheit entschlüsselt. Anschließend erzeugt die Verarbeitungseinheit des Touchmoduls 16 zweite Daten mit Informationen über den ersten und den zweiten Übertragungswert, verschlüsselt diese zweiten Daten mit einem voreingestellten Verschlüsselungsalgorithmus, insbesondere mit Hilfe eines Data Encryption Standard (DES) Verschlüsselungsalgorithmuses, und überträgt die verschlüsselten zweiten Daten über die erste Kabelverbindung 22 zum Sicherheitsmodul 18. Der Verschlüsselungsalgorithmus, mit dem die Verarbeitungseinheit die zweiten Daten verschlüsselt, ist insbesondere der gleiche Verschlüsselungsalgorithmus, mit dem das Sicherheitsmodul 18 die ersten Daten verschlüsselt.

Durch das Übertragen der Übertragungswerte und nicht der tatsächlichen Koordinaten der Berührung wird erreicht, dass, wenn Dritte die Übertragungswerte ermitteln und entschlüsseln würden, mit den gewonnen Informationen keine Rückschlüsse auf die Position der Berührung der Scheibe und somit auf die über die Position eingegebene Ziffer der PIN möglich ist. Somit wird eine sichere Eingabe der PIN ermöglicht.

Insbesondere werden bei jeder Berührung der Scheibe die Koordinaten dieser Berührung durch andere Versatzwerte verfälscht, so dass durch den einmaligen Vergleich der Übertragungswerte mit den tatsächlichen Koordinaten keine Rückschlüsse auf die Versatzwerte bei anderen Berührungen geschlossen werden kann. Die Versatzwerte werden insbesondere mit Hilfe eines Zufallsverfahrens durch das Sicherheitsmodul 18 ermittelt. Insbesondere wird hierzu ein Zufallszahlengenerator benutzt.

Das Sicherheitsmodul 18 entschlüsselt die verschlüsselten zweiten Daten und ermittelt durch Subtraktion des ersten Versatzwertes von dem ersten Übertragungswert und durch Subtraktion des zweiten Versatzwertes von dem zweiten Übertragungswert die erste und die zweite Koordinate der Position der Berührung der Scheibe. Durch den Vergleich der Position der Berührung der Scheibe und der Position, an der die Tastatur 42 angezeigt ist, ermittelt das Sicherheitsmodul 18 die durch die Berührung eingegebene Ziffer der PIN. Bei einer alternativen Ausführungsform der Erfindung kann auch nicht jede Ziffer der PIN einzeln von dem Touchmodul 16 an das Sicherheitsmodul 18 übermittelt werden, sondern Daten mit Informationen über die Koordinaten mehrerer Berührungen, die zusammen die PIN ergeben, übermittelt werden.

Durch das Verschlüsseln der zweiten Daten durch das Touchmodul 16 wird erreicht, dass diese Daten nie unverschlüsselt übertragen werden, so dass, selbst wenn die Daten abgefangen würden, hieraus kein Rückschluss auf die eingegebene PIN möglich ist. Somit wird ein hohes Maß an Sicherheit erreicht.

Wie zuvor beschrieben, kann das Sicherheitsmodul 18 in einem unsicheren und einem sicheren Betriebsmodus betrieben werden. Auf der Anzeigeeinheit 14 werden insbesondere zwei Anzeigeelemente, vorzugsweise in Form virtueller Lampen 44, 46, angezeigt, mit deren Hilfe angezeigt wird, in welchem Betriebsmodus die Vorrichtung 10 aktuell betrieben ist. Hierzu wird insbesondere im sicheren Betriebsmodus die erste virtuelle Lampe 44 in einem hellen Grünton und deine zweite virtuelle Lampe 46 in einem dunklen Rotton und im unsicheren Betriebsmodus die erste virtuelle Lampe 44 in einem dunklen Grünton und die zweite virtuelle Lampe 46 in einem hellen Rotton angezeigt. Somit wird das Aufleuchten einer grünen bzw. einer roten Lampe angedeutet, so dass die Bedienperson weiß, dass beim Aufleuchten der grünen Lampe die Vorrichtung 10 im sicheren Betriebsmodus und beim Aufleuchten der roten Lampe im unsicheren Betriebsmodus betrieben ist. Somit kann die Bedienperson darauf achten, dass sie ihre PIN nur im sicheren Betriebsmodus eingibt, so dass die Geheimhaltung ihrer PIN gewährleistet ist. Bei einer besonders bevorzugten Ausführungsform der Erfindung wird die Bedienperson über eine entsprechende Anzeige der Anzeigeeinheit 14 aufgefordert, ihre PIN nur dann einzugeben, wenn die Vorrichtung im sicheren Betriebsmodus betrieben ist.

Zusätzlich oder alternativ kann das Sicherheitsmodul 18 die Anzeigeeinheit 14 und/oder das Touchmodul 16 derart ansteuern, dass eine Eingabe einer PIN nur dann möglich ist, wenn die Vorrichtung 10 im sicheren Betriebsmodus betrieben ist. Hierzu steuert das Sicherheitsmodul 18 die Anzeigeeinheit 14 insbesondere derart an, dass die Anzeigeeinheit 14 nur dann eine Tastatur anzeigt, wenn die Vorrichtung 10 im sicheren Betriebsmodus betrieben ist.

Bei einer alternativen Ausführungsform der Erfindung kann der Betriebsmodus alternativ zu den virtuellen Lampen 44, 46 auch durch außerhalb der Anzeigeeinheit 14 vorgesehene Lampen, insbesondere LEDs, angezeigt werden. Ferner ist die Anzeige des Betriebsmodus in Textform auf der Anzeigeeinheit 14 und/oder die Ausgabe eines Warntons, wenn die vorrichtung 10 im unsicheren Betriebsmodus betrieben ist, möglich.

Wird über die Ausbauschutzschalter 30 bis 36 und/oder die Speicherelemente 38, 40 das Nichtvorhandensein der Anzeigeeinheit 14, das Nichtvorhandensein des Touchmoduls 16, eine Manipulation der Anzeigeeinheit 14, eine Manipulation des Touchmoduls 16, eine Trennung der ersten Kabelverbindung 22 eine Trennung der zweiten Kabelverbindung 24 und/oder ein sonstiger Manipulationsversuch ermittelt, steuert das Sicherheitsmodul 18 die Anzeigeeinheit 14 derart an, dass über sie angezeigt wird, dass die Vorrichtung 10 im unsicheren Betriebsmodus betrieben ist. Insbesondere ist auch in diesem Fall die Eingabe einer PIN nicht möglich.

Ferner umfasst die Vorrichtung 10 ein Sichtschutzelement 48, das ein Ausspähen der Eingabe der PIN verhindert. Das Sichtschutzelement 48 ist insbesondere derart ausgebildet, dass mindestens drei Seiten der Anzeigeeinheit 14 von dem Sichtschutzelement 48 umgeben sind, so dass eine seitlich zu der Bedienperson stehende weitere Person keine Sicht auf die Anzeigeeinheit 14 hat. Hierdurch wird verhindert, dass die weitere Person die Position, an der die Bedienperson die Scheibe berührt, sehen kann.

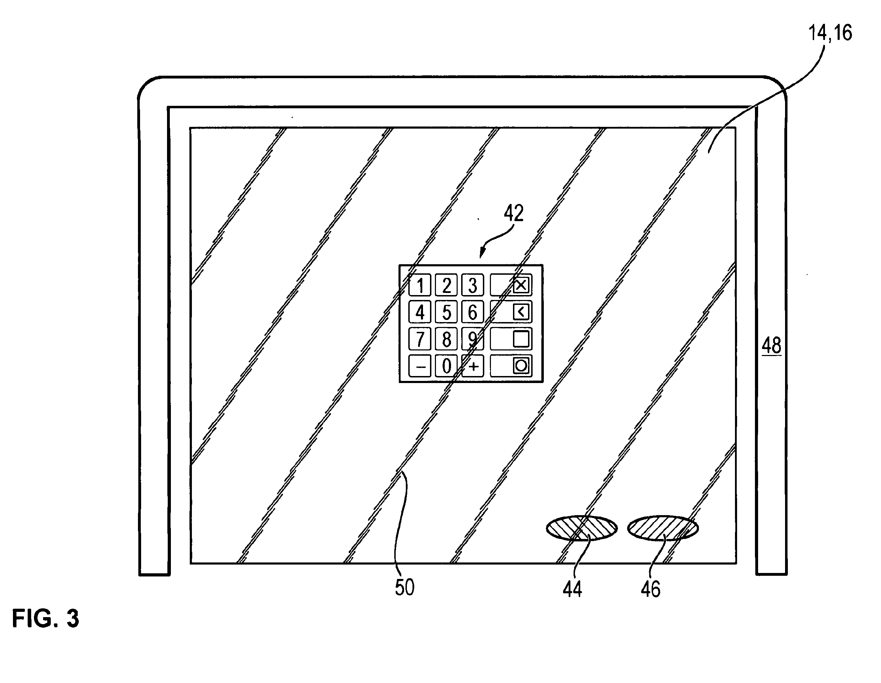

In Figur 3 ist eine schematische Darstellung eines Ausschnitts der Vorrichtung 10 gemäß einer zweiten Ausführungsform der Erfindung gezeigt. Bei dieser zweiten Ausführungsform der Erfindung ist auf der Scheibe eine Sichtschutzfolie 50 aufgebracht, durch die ebenfalls ein Ausspähen der PIN verhindert werden soll. Die Sichtschutzfolie 50 ist derart ausgebildet, dass nur die unmittelbar vor der Vorrichtung 10 stehende Bedienperson die Anzeige der Anzeigeeinheit 14 lesen kann. Eine weiter entfernt stehende Person oder seitlich neben der Bedienperson stehende Person kann dahingegen die Anzeige der Anzeigeeinheit 14 nicht lesen. Somit wird erreicht, dass, selbst wenn die weitere Person erkennen kann, an welcher Position die Bedienperson die Scheibe berührt, die weitere Person aber nicht erkennen kann, welche Taste an dieser Stelle angezeigt ist. Somit kann die weitere Person die PIN der Bedienperson nicht ausspähen.

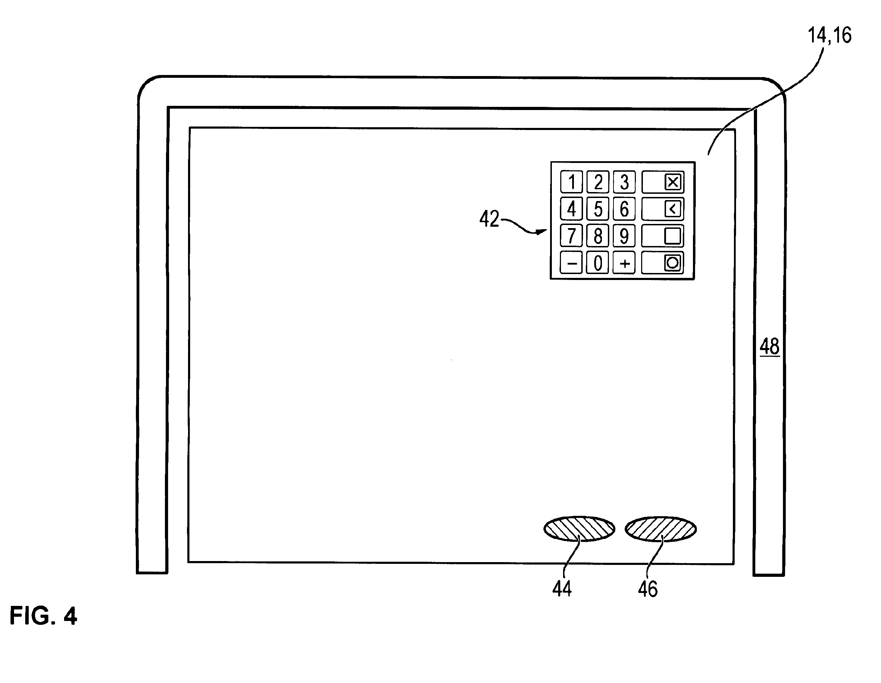

In Figur 4 ist eine schematische Darstellung eines Ausschnitts der Vorrichtung 10 gemäß einer dritten Ausführungsform der Erfindung gezeigt. Bei dieser dritten Ausführungsform der Erfindung überträgt das Sicherheitsmodul 18 vor der Eingabe der PIN durch die Bedienperson dritte Daten mit Informationen über diejenige Position, an der die Tastatur 42 auf der Anzeigeeinheit 14 angezeigt werden soll. Insbesondere umfassen diese dritten Daten eine erste und eine zweite Koordinate eines voreingestellten Punktes der Tastatur 42, insbesondere des Mittelpunktes der Tastatur 42.

zusätzlich oder alternativ kann auch die Größe der dargestellten Tastatur, die Größe einer oder mehrerer Tasten der dargestellten Tastatur und/oder die Abstände zwischen die Tasten variiert werden.

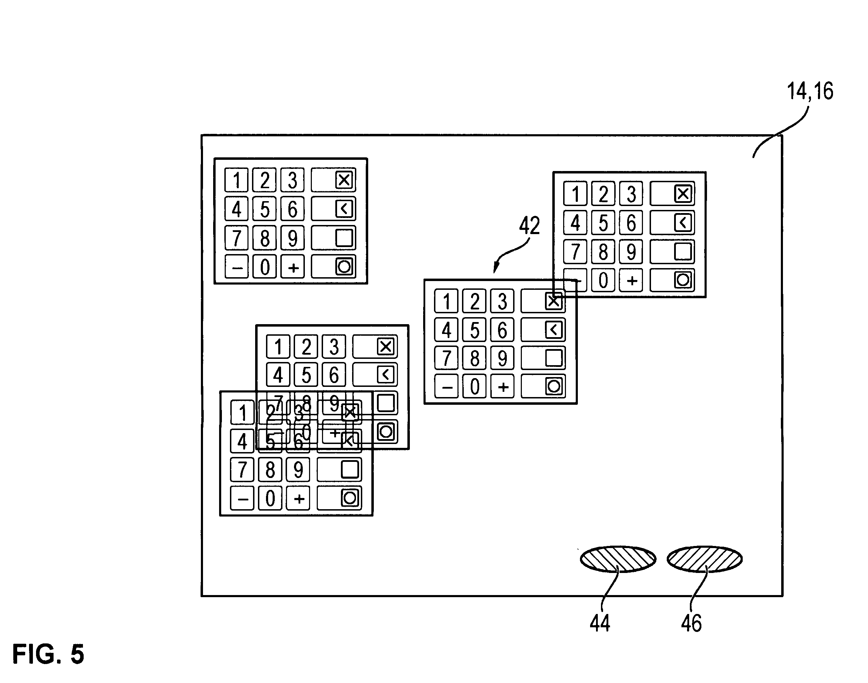

Das Sicherheitsmodul 18 ermittelt die Position, an der die Tastatur 42 dargestellt werden soll, insbesondere mit Hilfe eines Zufallsverfahrens, so dass bei verschiedenen PIN-Eingaben die Tastatur an unterschiedlichen Positionen der Anzeigeinheit 42 dargestellt wird. Dieses Darstellen der Tastatur 42 an verschiedenen Positionen der Anzeigeeinheit 14 ist in Figur 5 dargestellt. Das Sicherheitsmodul 18 umfasst insbesondere einen Zufallszahlengenerator, der die Koordinaten und/oder Größe der Tastatur 42 festlegt.

Durch das Anzeigen der Tastatur an verschiedenen Positionen der Anzeigeeinheit 14 bei verschiedenen PIN-Eingaben wird die Sicherheit der PIN-Eingabe erhöht. Insbesondere wird hierdurch vermieden, dass eine die PIN ausspähende Person eine Einheit zur Ermittlung der Position der Berührung der Scheibe in betrügerischer Absicht anbringt, um somit die Position der Scheibe unabhängig von dem Touchmodul 16 selbst zu ermitteln. Da die Tastatur 42 jeweils an einer anderen Position der Anzeigeeinheit 14 angezeigt wird, kann die ausspähende Person selbst aus der Kenntnis der tatsächlichen Koordinaten der Berührung der Scheibe keine Rückschlüsse auf die durch die Berührung eingegebene Ziffer und somit auf die PIN ziehen.

Durch die zuvor beschriebenen Sicherheitsmaßnahmen wird einzeln und insbesondere in ihrem Zusammenspiel ein hohes Maß für eine sichere Eingabe einer PIN über einen Touchscreen erreicht. Somit können bereits an Geldautomaten, automatischen Tresorkassen, automatischen Kassensystemen, Bezahlterminals, Kontoauszugsdruckern und/oder Informationsterminals vorgesehene Touchscreens, die bisher lediglich zur Bedienung und zur Eingabe nicht sicherheitsrelevanter Informationen genutzt wurden, auch für die Eingabe der PIN genutzt werden. Somit kann auf das Vorsehen einer separaten mechanischen Tastatur, insbesondere einer EPP-Tastatur, verzichtet werden, so dass ein einfacher kostengünstiger Aufbau der Vorrichtung 10 erreicht wird. Ferner werden somit die Bedienfreundlichkeit für die Bedienperson erhöht und der Wartungsaufwand gesenkt.

### Bezugszeichenliste

- 10: Vorrichtung
- 12: Leseeinheit
- 14: Anzeigeeinheit
- 16: Touchmodul
- 18: Sicherheitsmodul
- 20: Steuereinheit
- 22, 24: Kabelverbindung
- 26: Datenübertragungsverbindung
- 28: DVI-Switch
- 30 bis 36: Ausbauschutzschalter
- 38, 40: Speicherelement
- 42: Tastatur
- 44, 46: virtuelle Lampe
- 48: Sichtschutzelement
- 50: Sichtschutzfolie

## Patentansprüche

1. Vorrichtung zum Lesen von Magnetstreifen- und/oder Chipkarten, insbesondere von Bankkarten, EC-Karten und/oder Kreditkarten,
mit einer Anzeigeeinheit (14),
einem vor der Anzeigeeinheit (14) angeordneten Touchmodul (16), das mindestens einen Sensor zur Ermittlung einer Position einer Berührung eines Anzeigebereichs umfasst,
und mit einem Sicherheitsmodul (18) zur Steuerung der Anzeigeeinheit (14) und des Touchmoduls (16),
wobei das Sicherheitsmodul (18) erste Daten zur Darstellung einer Tastatur (42) mit Hilfe der Anzeigeeinheit (14) zum Eingeben einer persönlichen Identifikationsnummer (PIN) zur Anzeigeeinheit (14) überträgt,
das Touchmodul (16) auf eine Berührung des Anzeigebereichs hin zweite Daten mit Informationen über die Position der Berührung erzeugt, und
dass das Touchmodul (16) die zweiten Daten verschlüsselt und diese verschlüsselten Daten an das Sicherheitsmodul (18) überträgt
**dadurch gekennzeichnet, dass**
das Sicherheitsmodul (18) ermittelt, ob die Vorrichtung (10) in einem sicheren Betriebsmodus oder einem unsicheren Betriebsmodus betrieben ist, und
dass das Sicherheitsmodul (18) die Anzeigeeinheit (14) derart ansteuert, dass die Anzeigeeinheit (14) anzeigt, in welchen Betriebszustand die Vorrichtung (10) betrieben ist, oder dass der Betriebsmodus über eine außerhalb der Anzeigeeinheit angeordnete Lampe angezeigt wird, oder dass die Ausgabe des Betriebsmodus über einen Warnton erfolgt.

2. Vorrichtung (10) nach Anspruch 1, **dadurch gekennzeichnet, dass** das Sicherheitsmodul (18) die ersten Daten verschlüsselt und verschlüsselt zur Anzeigeeinheit (14) überträgt.

3. Vorrichtung (10) nach einem der vorhergehenden Ansprüche, **dadurch gekennzeichnet, dass** das Tochmodul (16) eine erste Koordinate und/oder ein zweite Koordinate der Position der Berührung des Anzeigebereichs ermittelt, dass das Touchmodul (16) einen ersten Übertragungswert durch Addition eines ersten Versatzwertes zu der erste Koordinate und/oder einen zweiten Übertragungswert durch Addition eines zweiten Versatzwertes zu der zweiten Koordinate ermittelt, und dass die zweiten Daten Informationen über den ersten Übertragungswert und/oder den zweiten Übertragungswert umfassen.

4. Vorrichtung (10) nach Anspruch 3, **dadurch gekennzeichnet, dass** das Sicherheitsmodul (18) den ersten Versatzwert und/oder den zweiten Versatzwert, insbesondere mit Hilfe eines Zufallszahlengenerators, ermittelt, und dass das Sicherheitsmodul (18) vor der Berührung des Anzeigebereichs dritte Daten mit Informationen über den ersten Versatzwert und/oder den zweiten Versatzwert, vorzugsweise verschlüsselt, an das Touchmodul (16) überträgt.

5. Vorrichtung (10) nach einem der vorhergehenden Ansprüche, **dadurch gekennzeichnet, dass** das Sicherheitsmodul (18) die ersten Daten und/oder die dritten Daten mit Hilfe eines hinterlegten Verschlüsselungsalgorithmuses, insbesondere mit Hilfe eines Data Encryption Standard (DES) Verschlüsselungsalgorithmuses, verschlüsselt und/oder, dass das Touchmodul (16) die zweiten Daten mit Hilfe eines hinterlegten Verschlüsselungsalgorithmuses, insbesondere mit Hilfe eines Data Encryption Standard (DES) Verschlüsselungsalgorithmuses, verschlüsselt.

6. Vorrichtung (10) nach einem der Ansprüche 3 bis 5, **dadurch gekennzeichnet, dass** das Sicherheitsmodul (18) die zweiten Daten entschlüsselt und die erste Koordinate durch Subtraktion des ersten Versatzwertes von dem ersten Übertragungswert und/oder die zweite Koordinate durch Subtraktion des zweiten Versatzwertes von dem zweiten Übertragungswert ermittelt.

7. Vorrichtung (10) nach einem der vorhergehenden Ansprüche, **dadurch gekennzeichnet, dass** die ersten Daten Informationen über die Position, an der die Tastatur (42) auf der Anzeigeeinheit (14) angezeigt werden soll, insbesondere eine erste Koordinate und eine zweite Koordinate eines Mittelpunktes der Tastatur (42), umfassen.

8. Vorrichtung (10) nach Anspruch 7, **dadurch gekennzeichnet, dass** das Sicherheitsmodul (18) die Position der Tastatur (42) mit Hilfe eines Zufallsverfahren festlegt.

9. Vorrichtung (10) nach Anspruch 7 oder 8, **dadurch gekennzeichnet, dass** das Sicherheitsmodul (18) die Anzeigeeinheit (14) derart ansteuert, dass die Anzeigeeinheit (14) bei einer ersten Eingabe einer persönlichen Identifikationsnummer (PIN) die Tastatur (42) an einer erste Position und bei einer zweiten Eingabe einer persönlichen Identifikationsnummer (PIN) an einer von der ersten Position verschiedenen zweiten Position anzeigt.

10. Vorrichtung (10) nach einem der vorhergehenden Ansprüche, **dadurch gekennzeichnet, dass** das Touchmodul (16) und das Sicherheitsmodul (18) über eine erste Kabelverbindung (22), insbesondere mit Hilfe eines USB-Kabels, und/oder die Anzeigeeinheit (14) und das Sicherheitsmodul (18) über eine zweite Kabelverbindung (24), insbesondere mit Hilfe eines USB-Kabels und/oder eines DVI-Kabels, miteinander verbunden sind, und das eine erster Sensor zur Ermittlung einer Unterbrechung der ersten Kabelverbindung (22) und/oder ein zweiter Sensor zur Ermittlung einer Unterbrechung der zweiten Kabelverbindung (24) vorgesehen sind.

11. Vorrichtung (10) nach einem der vorhergehenden Ansprüche, **dadurch gekennzeichnet, dass** das Touchmodul (16) und/oder die Anzeigeeinheit (14) jeweils ein Speicherelement (38, 40) umfasst, in dem Daten zur eindeutigen Identifikation des Touchmoduls (16) bzw. der Anzeigeeinheit (14) gespeichert sind, und dass das Sicherheitsmodul (18) diese Daten in voreingestellten Zeitabständen oder kontinuierlich ausliest und in Abhängigkeit der ausgelesenen Daten das Vorhandensein des Touchmoduls (16) bzw. der Anzeigeeinheit (14) ermittelt.

12. Vorrichtung (10) nach einem der vorhergehenden Ansprüche, **dadurch gekennzeichnet, dass** das Touchmodul (16) und/oder die Anzeigeeinheit (14) in einer Einbaulage an einem Gehäuseteil der Vorrichtung (10) gelagert sind, dass mindestens ein erster Ausbauschutzschalter (30 bis 36) und/oder ein zweiter Ausbauschutzschalter (30 bis 36) vorgesehen sind, dass der erste Ausbauschutzschalter (30 bis 36) bei einem Entfernen des Touchmoduls (16) aus der Einbaulage einen in der Einbaulage geöffneten elektrischen Stromkreis schließt oder einen in der Einbaulage geschlossenen elektrischen Stromkreis öffnet und dass das Sicherheitsmodul (18) durch das Schließen bzw. Öffnen des Stromkreises das Entfernen des Touchmoduls (16) aus der Einbaulage detektiert, dass der zweite Ausbauschutzschalter (30 bis 36) bei einem Entfernen der Anzeigeeinheit (14) aus der Einbaulage einen in der Einbaulage geöffneten elektrischen Stromkreis schließt oder einen in der Einbaulage geschlossenen elektrischen Stromkreis öffnet, und dass das Sicherheitsmodul (18) durch das Schließen bzw. Öffnen des Stromkreises das Entfernen der Anzeigeeinheit (14) aus der Einbaulage detektiert.

13. Vorrichtung (10) nach einem der vorhergehenden Ansprüche, **dadurch gekennzeichnet, dass** die Vorrichtung (10) eine Steuereinheit (20) zur Steuerung des Sicherheitsmoduls (18) umfasst, und dass die Steuereinheit (20) über mindestens eine Datenübertragungsverbindung (26) mit dem Sicherheitsmodul (18) verbunden ist.

## Claims

1. Apparatus for reading magnetic-strip and/or chip cards, particularly bank cards, EC cards and/or credit cards,
having a display unit (14),
a touch module (16), arranged in front of the display unit (14), that has at least one sensor for ascertaining a position of a touch on a display area,
and having a security module (18) for controlling the display unit (14) and the touch module (16),
wherein the security module (18) transmits first data, for presenting a keypad (42) using the display unit (14) for the purpose of inputting a personal identification number (PIN), to the display unit (14),
the touch module (16), upon a touch on the display area, produces second data with information about the position of the touch, and
the touch module (16) encrypts the second data and transmits these encrypted data to the security module (18),
**characterized in that**
the security module (18) ascertains whether the apparatus (10) is being operated in a secure mode of operation or a non-secure mode of operation, and
**in that** the security module (18) actuates the display unit (14) such that the display unit (14) indicates the operating state in which the apparatus (10) is being operated, or **in that** the mode of operation is indicated by means of a lamp arranged outside the display unit, or **in that** the mode of operation is output by means of a warning tone.

2. Apparatus (10) according to Claim 1, **characterized in that** the security module (18) encrypts the first data and transmits them to the display unit (14) in encrypted form.

3. Apparatus (10) according to either of the preceding claims, **characterized in that** the touch module (16) ascertains a first coordinate and/or a second coordinate for the position of the touch on the display area, **in that** the touch module (16) ascertains a first transmission value by adding a first offset value to the first coordinate and/or a second transmission value by adding a second offset value to the second coordinate, and **in that** the second data comprise information about the first transmission value and/or the second transmission value.

4. Apparatus (10) according to Claim 3, **characterized in that** the security module (18) ascertains the first offset value and/or the second offset value, particularly using a random number generator, and **in that** the security module (18), prior to the touch on the display area, transmits third data with information about the first offset value and/or the second offset value, preferably in encrypted form, to the touch module (16).

5. Apparatus (10) according to one of the preceding claims, **characterized in that** the security module (18) encrypts the first data and/or the third data using a stored encryption algorithm, particularly using a Data Encryption Standard (DES) encryption algorithm, and/or in that the touch module (16) encrypts the second data using a stored encryption algorithm, particularly using a Data Encryption Standard (DES) encryption algorithm.

6. Apparatus (10) according to one of Claims 3 to 5, **characterized in that** the security module (18) decrypts the second data and ascertains the first coordinate by subtracting the first offset value from the first transmission value and/or the second coordinate by subtracting the second offset value from the second transmission value.

7. Apparatus (10) according to one of the preceding claims, **characterized in that** the first data comprise information about the position at which the keypad (42) is intended to be displayed on the display unit (14), particularly a first coordinate and a second coordinate for a centre of the keypad (42).

8. Apparatus (10) according to Claim 7, **characterized in that** the security module (18) stipulates the position of the keypad (42) using a random method.

9. Apparatus (10) according to Claim 7 or 8, **characterized in that** the security module (18) actuates the display unit (14) such that the display unit (14) displays the keypad (42) at a first position for a first input of a personal identification number (PIN) and at a second position, which is different from the first position, for a second input of a personal identification number (PIN).

10. Apparatus (10) according to one of the preceding claims, **characterized in that** the touch module (16) and the security module (18) are connected to one another by means of a first cable connection (22), particularly using a USB cable, and/or the display unit (14) and the security module (18) are connected to one another by means of a second cable connection (24), particularly using a USB cable and/or a DVI cable, and **in that** a first sensor for ascertaining an interruption in the first cable connection (22) and/or a second sensor for ascertaining an interruption in the second cable connection (24) are provided.

11. Apparatus (10) according to one of the preceding claims, **characterized in that** the touch module (16) and/or the display unit (14) each comprise a memory element (38, 40) that stores data for explicitly identifying the touch module (16) or the display unit (14), and **in that** the security module (18) reads these data at preset intervals of time or continuously and ascertains the presence of the touch module (16) or the display unit (14) on the basis of the read data.

12. Apparatus (10) according to one of the preceding claims, **characterized in that** the touch module (16) and/or the display unit (14) are mounted in an installation position on a housing portion of the apparatus (10), **in that** at least a first disassembly protection switch (30 to 36) and/or a second disassembly protection switch (30 to 36) are provided, **in that** the first disassembly protection switch (30 to 36) completes an electrical circuit that is broken in the installation position or breaks an electrical circuit that is complete in the installation position when the touch module (16) is removed from the installation position and **in that** the security module (18) detects the removal of the touch module (16) from the installation position by virtue of the completion or breaking of the circuit, **in that** the second disassembly protection switch (30 to 36) completes an electrical circuit that is broken in the installation position or breaks an electrical circuit that is complete in the installation position when the display unit (14) is removed from the installation position, and **in that** the security module (18) detects the removal of the display unit (14) from the installation position by virtue of the completion or breaking of the circuit.

13. Apparatus (10) according to one of the preceding claims, **characterized in that** the apparatus (10) comprises a control unit (20) for controlling the security module (18), and **in that** the control unit (20) is connected to the security module (18) by means of at least one data transmission connection (26).

## Revendications

1. Dispositif de lecture de cartes à bande magnétique et/ou à puce, notamment de cartes bancaires, cartes EC et/ou cartes de crédit,
comprenant une unité d'affichage (14),
un module tactile (16) disposé devant l'unité d'affichage (14), lequel comprend au moins un capteur pour déterminer une position d'un contact avec une zone d'affichage,
et comprenant un module de sécurité (18) pour commander l'unité d'affichage (14) et le module tactile (16),
le module de sécurité (18) transmettant à l'unité d'affichage (14) des premières données en vue de représenter un clavier (42) à l'aide de l'unité d'affichage (14) pour la saisie d'un numéro d'identification personnel (PIN),
le module tactile (16), sur un contact avec la zone d'affichage, générant des deuxièmes données avec des informations sur la position du contact, et
le module tactile (16) cryptant les deuxièmes données et transmettant ces données cryptées au module de sécurité (18),
**caractérisé en ce que**
le module de sécurité (18) détermine si le dispositif (10) est utilisé dans un mode de fonctionnement sécurisé ou dans un mode de fonctionnement non sécurisé, et
**en ce que** le module de sécurité (18) commande l'unité d'affichage (14) de telle sorte que l'unité d'affichage (14) affiche l'état de fonctionnement dans lequel est utilisé le dispositif (10), ou **en ce que** le mode de fonctionnement est indiqué par une lampe disposée en-dehors de l'unité d'affichage, ou **en ce que** le mode de fonctionnement est signalé par le biais d'un signal sonore d'avertissement.

2. Dispositif (10) selon la revendication 1, **caractérisé en ce que** le module de sécurité (18) crypte les premières données et les transmet cryptées vers l'unité d'affichage (14).

3. Dispositif (10) selon l'une des revendications précédentes, **caractérisé en ce que** le module tactile (16) détermine une première coordonnée et/ou une deuxième coordonnée de la position du contact avec la zone d'affichage, **en ce que** le module tactile (16) détermine une première valeur de transmission par addition d'une première valeur de décalage à la première coordonnée et/ou une deuxième valeur de transmission par addition d'une deuxième valeur de décalage à la deuxième coordonnée, et **en ce que** les deuxièmes données comprennent des informations sur la première valeur de transmission et/ou la deuxième valeur de transmission.

4. Dispositif (10) selon la revendication 3, **caractérisé en ce que** le module de sécurité (18) détermine la première valeur de décalage et/ou la deuxième valeur de décalage, notamment à l'aide d'un générateur de nombres aléatoires, et **en ce que** le module de sécurité (18), avant le contact avec la zone d'affichage, transmet au module tactile (16) des troisièmes données avec des informations sur la première valeur de décalage et/ou la deuxième valeur de décalage, de préférence cryptées.

5. Dispositif (10) selon l'une des revendications précédentes, **caractérisé en ce que** le module de sécurité (18) crypte les premières données et/ou les troisièmes données à l'aide d'un algorithme de cryptage stocké, notamment à l'aide d'un algorithme de cryptage DES (Data Encryption Standard - Norme de cryptage de données), et/ou **en ce que** le module tactile (16) crypte les deuxièmes données à l'aide d'un algorithme de cryptage stocké, notamment à l'aide d'un algorithme de cryptage DES (Data Encryption Standard - Norme de cryptage de données).

6. Dispositif (10) selon l'une des revendications 3 à 5, **caractérisé en ce que** le module de sécurité (18) décrypte les deuxièmes données et détermine la première coordonnée par soustraction de la première valeur de décalage de la première valeur de transmission et/ou la deuxième coordonnée par soustraction de la deuxième valeur de décalage de la deuxième valeur de transmission.

7. Dispositif (10) selon l'une des revendications précédentes, **caractérisé en ce que** les premières données comprennent des informations sur la position à laquelle le clavier (42) doit être affiché sur l'unité d'affichage (14), notamment une première coordonnée et une deuxième coordonnée d'un point central du clavier (42).

8. Dispositif (10) selon la revendication 7, **caractérisé en ce que** le module de sécurité (18) définit la position du clavier (42) à l'aide d'un procédé aléatoire.

9. Dispositif (10) selon la revendication 7 ou 8, **caractérisé en ce que** le module de sécurité (18) commande l'unité d'affichage (14) de telle sorte que l'unité d'affichage (14), lors d'une première saisie d'un numéro d'identification personnel (PIN), affiche le clavier (42) à une première position et, lors d'une deuxième saisie d'un numéro d'identification personnel (PIN), l'affiche à une deuxième position différente de la première position.

10. Dispositif (10) selon l'une des revendications précédentes, **caractérisé en ce que** le module tactile (16) et le module de sécurité (18) sont reliés ensemble par le biais d'une première liaison par câble (22), notamment à l'aide d'un câble USB, et/ou l'unité d'affichage (14) et le module de sécurité (18) sont reliés ensemble par le biais d'une deuxième liaison par câble (24), notamment à l'aide d'un câble USB et/ou d'un câble DVI, et **en ce qu'**il est prévu un premier capteur pour déterminer une interruption de la première liaison par câble (22) et/ou un deuxième capteur pour déterminer une interruption de la deuxième liaison par câble (24).

11. Dispositif (10) selon l'une des revendications précédentes, **caractérisé en ce que** le module tactile (16) et/ou l'unité d'affichage (14) comprennent respectivement un élément de mémoire (38, 40) dans lequel sont enregistrées des données destinées à l'identification univoque du module tactile (16) ou de l'unité d'affichage (14), et **en ce que** le module de sécurité (18) lit ces données à des intervalles de temps préréglés ou continuellement et détermine la présence du module tactile (16) ou de l'unité d'affichage (14) en fonction des données lues.

12. Dispositif (10) selon l'une des revendications précédentes, **caractérisé en ce que** le module tactile (16) et/ou l'unité d'affichage (14), dans une position de montage, sont logés sur une partie de boîtier du dispositif (10), **en ce qu'**il est prévu au moins un premier commutateur de protection contre le démontage (30 à 36) et/ou un deuxième commutateur de protection contre le démontage (30 à 36), **en ce que** le premier commutateur de protection contre le démontage (30 à 36), dans le cas où le module tactile (16) est retiré de la position de montage, ferme un circuit électrique ouvert en position de montage ou ouvre un circuit électrique fermé en position de montage, et **en ce que** le module de sécurité (18), par la fermeture ou l'ouverture du circuit, détecte le retrait du module tactile (16) de la position de montage, **en ce que** le deuxième commutateur de protection contre le démontage (30 à 36), dans le cas où l'unité d'affichage (14) est retirée de la position de montage, ferme un circuit électrique ouvert en position de montage ou ouvre un circuit électrique fermé en position de montage, et **en ce que** le module de sécurité (18), par la fermeture ou l'ouverture du circuit, détecte le retrait de l'unité d'affichage (14) de la position de montage.

13. Dispositif (10) selon l'une des revendications précédentes, **caractérisé en ce que** le dispositif (10) comprend une unité de commande (20) pour commander le module de sécurité (18), et **en ce que** l'unité de commande (20) est reliée avec le module de sécurité (18) par le biais d'au moins une liaison de transmission de données (26).
